# DEMANDE DE BREVET EUROPEEN

(11) **EP 3 321 861 A1**
(43) Date de publication de la demande: **16.05.2018**
(21) Numéro de dépôt: 17200832.8
(22) Date de dépôt: 09.11.2017
(51) Int. Cl.: G06K 9/62

(54) **DRONE COMPRENANT UN DISPOSITIF DE DÉTERMINATION D'UNE REPRÉSENTATION D'UNE CIBLE VIA UN RÉSEAU DE NEURONES, PROCÉDÉ DE DÉTERMINATION ET PROGRAMME D'ORDINATEUR ASSOCIÉS**

(30) Priorité: 09.11.2016 FR 1660845
(71) Demandeur: Parrot Drones, 75010 Paris (FR)
(72) Inventeur: VAUCHIER, Léa, 75017 PARIS (FR); BRIOT, Alexandre, 75010 PARIS (FR)
(74) Mandataire: Lavoix

(57) **Abrégé**

Ce drone (10) comprend un capteur d'image (12) configuré pour prendre une image d'une scène comportant une pluralité d'objets, et un dispositif électronique de détermination (14) comportant un module électronique de détection (24) configuré pour détecter via un réseau de neurones, dans l'image prise par le capteur d'image (12), une représentation d'une cible potentielle (16) parmi la pluralité d'objets représentés, une variable d'entrée du réseau de neurones étant une image dépendant de l'image prise, au moins une variable de sortie du réseau de neurones étant une indication relative à la représentation de la cible potentielle.

Une première variable de sortie du réseau de neurones est un ensemble de coordonnées définissant un contour d'une zone entourant la représentation de la cible potentielle (16).

## Description

La présente invention concerne un drone. Le drone comprend un capteur d'image configuré pour prendre une image d'une scène comportant une pluralité d'objets, et un dispositif électronique de détermination comportant un module électronique de détection configuré pour détecter, dans l'image prise par le capteur d'image, une représentation d'une cible potentielle parmi la pluralité d'objets représentés.

L'invention concerne également un procédé de détermination d'une représentation d'une cible potentielle parmi une pluralité d'objets représentés dans une image, l'image étant issue d'un capteur d'image embarqué sur un drone.

L'invention concerne également un programme d'ordinateur comportant des instructions logicielles qui, lorsqu'elles sont exécutées par un ordinateur, mettent en oeuvre un tel procédé de détermination.

L'invention concerne le domaine des drones, c'est-à-dire des appareils motorisés volants pilotés à distance. L'invention s'applique notamment aux drones à voilure tournante, tels que les quadricoptères, tout en s'appliquant également à d'autres types de drones, par exemple les drones à voilure fixe.

L'invention est particulièrement utile lorsque le drone est dans un mode de poursuite dans le but de suivre une cible donnée, telle que le pilote du drone pratiquant une activité sportive.

L'invention offre alors de nombreuses applications, en particulier pour une initialisation d'un suivi de cibles mobiles ou encore pour un asservissement, ou recalibrage, d'un tel suivi de cibles mobiles.

On connait un drone du type précité de la publication « *Moving Vehicle Detection with Convolutional Networks in UAV Videos* » de Qu et al. Le drone comprend un capteur d'image apte à prendre une image d'une scène comportant une pluralité d'objets, et un dispositif électronique de détermination d'une représentation d'une cible parmi la pluralité d'objets représentés.

Le dispositif de détermination effectue, dans un premier temps, une détection de zones entourant des représentations candidates de la cible et calcule des contours des zones, chaque contour étant en forme d'une fenêtre, généralement rectangulaire, cette détection étant effectuée à l'aide d'un procédé classique de différence de contours (de l'anglais *frame difference method*) ou d'une modélisation de l'arrière-plan (de l'anglais *background modeling*). Le dispositif de détermination effectue, dans un second temps, une classification des représentations candidates de la cible en utilisant un réseau de neurones avec en variables d'entrée les contours de zones préalablement détectés et en variables de sortie un type associé à chaque représentation candidate, le type étant parmi un véhicule et un arrière-plan. Le réseau de neurones permet alors de classer les représentations candidates de la cible entre un premier groupe de représentations candidates susceptibles chacune de correspondre à un véhicule et un second groupe de représentations candidates susceptibles chacune de correspondre à un arrière-plan.

Toutefois, la détermination de la représentation de la cible avec un tel drone est relativement complexe.

Le but de l'invention est alors de proposer un drone qui soit plus efficace pour la détermination de la représentation de la cible, en ne nécessitant notamment pas nécessairement de connaitre la position de la cible pour pouvoir en détecter une représentation dans l'image.

A cet effet, l'invention a pour objet un drone, comprenant :
- un capteur d'image configuré pour prendre une image d'une scène comportant une pluralité d'objets,
- un dispositif électronique de détermination comportant un module électronique de détection configuré pour détecter via un réseau de neurones, dans l'image prise par le capteur d'image, une représentation d'une cible potentielle parmi la pluralité d'objets représentés, une variable d'entrée du réseau de neurones étant une image dépendant de l'image prise, au moins une variable de sortie du réseau de neurones étant une indication relative à la représentation de la cible potentielle, une première variable de sortie du réseau de neurones étant un ensemble de coordonnées définissant un contour d'une zone entourant la représentation de la cible potentielle.

Avec le drone selon l'invention, le réseau de neurones, mis en oeuvre par le module électronique de détection, permet d'obtenir en sortie un ensemble de coordonnées définissant un contour d'une zone entourant la représentation de la cible potentielle, directement à partir d'une image fournie en entrée dudit réseau de neurones.

A la différence du drone de l'état de la technique, il n'est alors pas nécessaire d'effectuer, préalablement à la mise en oeuvre du réseau de neurones, une différence de contours ou une modélisation de l'arrière-plan pour estimer ladite zone entourant une représentation de la cible.

Suivant d'autres aspects avantageux de l'invention, le drone comprend une ou plusieurs des caractéristiques suivantes, prises isolément ou suivant toutes les combinaisons techniquement possibles :
- une deuxième variable de sortie du réseau de neurones est une catégorie associée à la représentation de la cible,
   la catégorie étant de préférence choisi parmi le groupe consistant en : une personne, un animal, un véhicule, un élément de mobilier contenu dans une habitation ;
- une troisième variable de sortie du réseau de neurones est un indice de confiance par catégorie associé à chaque représentation d'une cible potentielle ;
- le module électronique de détection est configuré en outre pour ignorer une représentation ayant un indice de confiance inférieur à un seuil prédéfini ;
- le dispositif électronique de détermination comporte en outre un module électronique de suivi configuré pour suivre, dans différentes images prises successivement par le capteur d'image, une représentation de la cible ;
- le dispositif électronique de détermination comporte en outre un module électronique de comparaison configuré pour comparer une première représentation de la cible potentielle issue du module électronique de détection avec une deuxième représentation de la cible issue du module électronique de suivi ; et
- le réseau de neurones est un réseau de neurones convolutionnel.

L'invention a également pour objet un procédé de détermination d'une représentation d'une cible potentielle parmi une pluralité d'objets représentés dans une image, l'image étant issue d'un capteur d'image embarqué sur un drone,
le procédé étant mis en oeuvre par un dispositif électronique de détermination embarqué sur le drone, et comprenant :
- l'acquisition d'au moins une image d'une scène comportant une pluralité d'objets,
- la détection via un réseau de neurones, dans l'image acquise, d'une représentation de la cible potentielle parmi la pluralité d'objets représentés, une variable d'entrée du réseau de neurones étant une image dépendant de l'image acquise, au moins une variable de sortie du réseau de neurones étant une indication relative à la représentation de la cible potentielle,
une première variable de sortie du réseau de neurones étant un ensemble de coordonnées définissant un contour d'une zone entourant la représentation de la cible potentielle.

Suivant d'autres aspects avantageux de l'invention, le procédé de détermination comprend une ou plusieurs des caractéristiques suivantes, prises isolément ou suivant toutes les combinaisons techniquement possibles :
- le procédé comprend en outre le suivi, dans différentes images acquises successivement, d'une représentation de la cible ; et
- le procédé comprend en outre la comparaison de première et deuxième représentations de la cible, la première représentation de la cible potentielle étant obtenue via la détection avec le réseau de neurones, et la deuxième représentation de la cible étant obtenue via le suivi de la représentation de la cible dans différentes images acquises successivement.

L'invention a également pour objet un programme d'ordinateur comportant des instructions logicielles qui, lorsqu'elles sont exécutées par un ordinateur, mettent en oeuvre un procédé tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un drone comprenant au moins un capteur d'image et un dispositif électronique de détermination de représentation(s) d'une ou plusieurs cibles potentielles parmi la pluralité d'objets représentés dans une ou plusieurs images prises par le capteur d'image ;
- la figure 2 est une représentation d'un réseau de neurones artificiels mis en oeuvre par un module de détection inclus dans le dispositif de détermination de la figure 1 ;
- la figure 3 est une représentation du réseau de neurones sous forme de couches de traitement successives ; et
- la figure 4 est un organigramme d'un procédé de détermination de représentation(s) d'une ou plusieurs cibles potentielles selon l'invention.

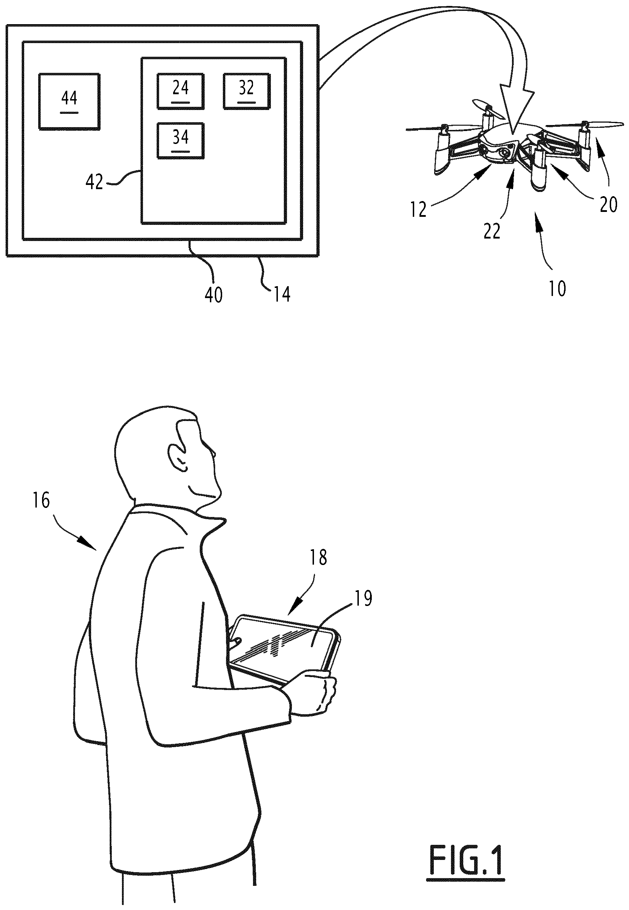

Sur la figure 1, un drone 10, c'est-à-dire un aéronef sans pilote à bord, comprend un capteur d'image 12 configuré pour prendre une image d'une scène comportant une pluralité d'objets, et un dispositif électronique de détermination 14 configuré pour déterminer une ou plusieurs représentations d'une ou plusieurs cibles potentielles 16 parmi la pluralité d'objets représentés dans l'image prise par le capteur 12.

Le drone 10 est un engin volant motorisé pilotable à distance, notamment via une manette 18.

Le drone 10 est par exemple un drone à voilure tournante, comportant au moins un rotor 20. Sur la figure 1, le drone comporte une pluralité de rotors 20, et est alors appelé drone multirotor. Le nombre de rotors 20 est en particulier égal à 4 dans cet exemple, et le drone 10 est alors un drone quadrirotor. En variante, non représentée, le drone 10 est un drone à voilure fixe.

Le drone 10 comporte un module de transmission 22 configuré pour échanger des données, de préférence par ondes radioélectriques, avec un ou plusieurs équipements électroniques, notamment avec la manette 18, voire avec d'autres éléments électroniques pour la transmission de la ou des images acquises par le capteur d'image 12.

Le capteur d'image 12 est par exemple une caméra à visée frontale permettant d'obtenir une image de la scène vers laquelle est orienté le drone 10. En variante ou en complément, le capteur d'image 12 est une caméra à visée verticale, non représentée, pointant vers le bas et configurée pour capter des images successives d'un terrain survolé par le drone 10.

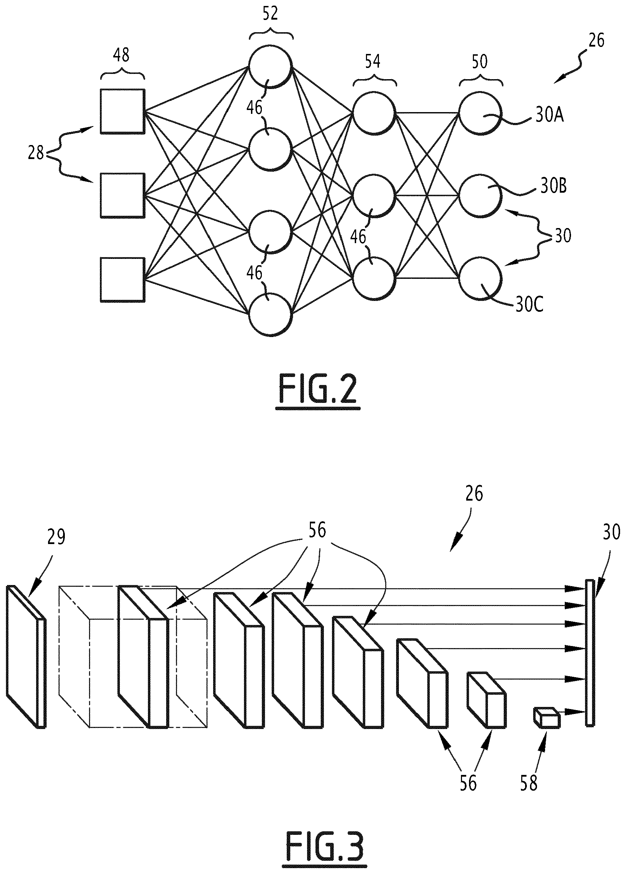

Le dispositif électronique de détermination 14 est embarqué à bord du drone 10, et comporte un module électronique de détection 24 configuré pour détecter, dans l'image prise par le capteur d'image 12 et via un réseau de neurones artificiels 26, représenté sur les figures 2 et 3, la ou les représentations d'une ou plusieurs cibles potentielles 16 parmi la pluralité d'objets représentés dans l'image. Une variable d'entrée 28 du réseau de neurones artificiels est une image dépendant de l'image prise, et au moins une variable de sortie 30 du réseau de neurones artificiels est une indication relative à la ou aux représentations d'une ou plusieurs cibles potentielles 16.

Le dispositif électronique de détermination 14 selon l'invention est utilisé pour différentes applications, en particulier pour l'initialisation d'un suivi de cible mobile ou encore pour l'asservissement, ou le recalibrage, d'un tel suivi de cible mobile.

On entend alors par « cible potentielle », également appelée cible possible, une cible dont la représentation va être détectée via le dispositif électronique de détermination 14 comme une cible à suivre de manière potentielle, mais qui ne sera pas nécessairement une cible suivie *in fine* par le drone 10. En effet, la ou les cibles à suivre par le drone 10, en particulier par son capteur d'image 12, seront la ou les cibles qui auront été sélectionnées, par l'utilisateur ou encore par un autre dispositif électronique en cas de sélection automatique sans intervention de l'utilisateur, comme cible(s) à suivre, notamment parmi la ou les cibles potentielles déterminées via le dispositif électronique de détermination 14.

En complément facultatif, le dispositif électronique de détermination 14 comporte en outre un module électronique de suivi 32 configuré pour suivre, dans différentes images prises successivement par le capteur d'image 12, une représentation de la cible 16.

En complément facultatif, le dispositif électronique de détermination 14 comporte en outre un module électronique de comparaison 34 configuré pour comparer une ou plusieurs premières représentations d'une ou plusieurs cibles potentielles 16 issues du module électronique de détection 24 avec une deuxième représentation de la cible 16 issue du module électronique de suivi 32.

Dans l'exemple de la figure 1, le dispositif électronique de détermination 14 comporte une unité de traitement d'informations 40, formée par exemple d'une mémoire 42 et d'un processeur 44 de type GPU (Graphics Processing Unit), ou VPU (Vision Processing Unit) associé à la mémoire 42.

La cible 16 est par exemple une personne, telle que le pilote du drone 10, le dispositif électronique de détermination 14 étant particulièrement utile lorsque le drone 10 est dans un mode de poursuite pour suivre la cible 16, notamment lorsque le pilote du drone 10 pratique une activité sportive. L'homme du métier comprendra bien entendu que l'invention s'applique à tout type de cible 16 ayant fait l'objet d'un apprentissage par le réseau de neurones 26, la cible 16 étant de préférence mobile. L'apprentissage utilisé par le réseau de neurones 26 pour effectuer un apprentissage du type de cible est, par exemple, un apprentissage supervisé. Un apprentissage est dit supervisé lorsque le réseau de neurones 26 est forcé à converger vers un état final, en même temps qu'un motif lui est présenté.

Le dispositif électronique de détermination 14 est également utile lorsque le drone 10 est dans un mode de pointage vers la cible 16, permettant au drone 10 de toujours viser la cible 16, mais sans se déplacer tout seul, laissant au pilote la possibilité de changer la position relative du drone 10, par exemple en tournant autour de la cible 16.

La manette 18 est connue en soi, et permet de piloter le drone 10. Dans l'exemple de la figure 1, la manette 18 est mise en oeuvre via un ordiphone (de l'anglais *smartphone*) ou une tablette électronique, comportant un écran d'affichage 19, de préférence tactile. En variante, non représentée, la manette 18 comprend deux poignées de préhension, chacune étant destinée à être saisie par une main respective du pilote, une pluralité d'organes de commande, dont deux manches à balai (de l'anglais *joystick*), chacun étant disposé à proximité d'une poignée de préhension respective et étant destiné à être actionné par le pilote, de préférence par un pouce respectif.

La manette 18 comprend une antenne radioélectrique et un émetteur-récepteur radioélectrique, non représentés, pour l'échange de données par ondes radioélectriques avec le drone 10, à la fois en liaison montante et en liaison descendante.

Dans l'exemple de la figure 1, le module de détection 24, ainsi qu'en complément facultatif le module de suivi 32 et le module de comparaison 34, sont réalisés chacun sous forme d'un logiciel exécutable par le processeur 44. La mémoire 42 de l'unité de traitement d'informations 40 est alors apte à stocker un logiciel de détection configuré pour détecter via le réseau de neurones artificiels 26, dans l'image prise par le capteur d'image 12, une ou des représentations d'une ou plusieurs cibles potentielles 16 parmi la pluralité d'objets représentés. En complément facultatif, la mémoire 42 de l'unité de traitement d'informations 40 est également apte à stocker un logiciel de suivi configuré pour suivre, dans différentes images prises successivement par le capteur d'image 12, une représentation de la cible 16, et un logiciel de comparaison configuré pour comparer la ou les premières représentations des cibles potentielles issue du logiciel de détection avec une deuxième représentation de la cible issue du logiciel de suivi. Le processeur 44 de l'unité de traitement d'informations 40 est alors apte à exécuter le logiciel de détection, ainsi qu'en complément facultatif le logiciel de suivi et le logiciel de comparaison.

En variante non représentée, le module de détection 24, ainsi qu'en complément facultatif le module de suivi 32 et le module de comparaison 34, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

Le module électronique de détection 24 est configuré pour détecter, via le réseau de neurones artificiels 26 et dans l'image prise par le capteur d'image 12, la ou les représentations d'une ou plusieurs cibles potentielles 16 parmi la pluralité d'objets représentés, une variable d'entrée 28 du réseau de neurones étant une image 29 fonction de l'image prise par le capteur d'image 12, au moins une variable de sortie 30 du réseau de neurones étant une indication relative à la ou aux représentations d'une ou plusieurs cibles potentielles 16.

Le réseau de neurones 26 comporte une pluralité de neurones artificiels 46 organisés en couches successives 48, 50, 52, 54, à savoir une couche d'entrée 48 correspondant à la ou aux variables d'entrée 28, une couche de sortie 50 correspondant à la ou aux variables de sortie 30, et d'éventuelles couches intermédiaires 52, 54, également appelées couches cachées et disposées entre la couche d'entrée 48 et la couche de sortie 50. Une fonction d'activation caractérisant chaque neurone artificiel 46 est, par exemple, une fonction non linéaire par exemple de type ReLU (de l'anglais *Rectified Linear Unit*). Les valeurs initiales de poids synaptiques sont, par exemple, fixées aléatoirement ou pseudo-aléatoirement.

Le réseau de neurones artificiels 26 est notamment un réseau de neurones convolutionnel, comme représenté sur la figure 3.

Le réseau de neurones artificiels 26 comporte, par exemple, des neurones artificiels 46 agencés en couches de traitement 56 successives, visibles sur la figure 3 et configurées pour traiter successivement l'information sur une portion limitée de l'image, appelée champ réceptif ou encore champ récepteur (de l'anglais *receptive field*), d'une part au travers d'une fonction de convolution, et d'autre part, des neurones de mise en commun des sorties (de l'anglais *pooling neurons*). L'ensemble des sorties d'une couche de traitement forme une image intermédiaire, servant de base à la couche suivante.

Le réseau de neurones artificiels 26 est de préférence configuré de telle sorte que les portions à traiter de l'image, c'est-à-dire les champs récepteurs, se chevauchent, afin d'obtenir une meilleure représentation de l'image originale 29, ainsi qu'une meilleure cohérence du traitement au fil des couches de traitement 56. Le chevauchement est défini par un pas, c'est-à-dire un décalage entre deux champs récepteurs adjacents.

Le réseau de neurones artificiels 26 comporte un ou plusieurs noyaux de convolution. Un noyau de convolution analyse une caractéristique de l'image pour obtenir, à partir de l'image d'origine 29, une nouvelle caractéristique de l'image à une couche donnée, cette nouvelle caractéristique de l'image étant également appelée canal (de l'anglais *channel*, aussi connu en anglais sous la terminologie *feature map*). L'ensemble des canaux forment une couche de traitement convolutif, correspondant en fait à un volume, souvent appelé volume de sortie, et le volume de sortie est assimilable à une image intermédiaire.

Les noyaux de convolution du réseau de neurones 26 sont de préférence de tailles impaires, pour avoir une information spatiale centrée sur un pixel à traiter. Les noyaux de convolution du réseau de neurones 26 sont alors des noyaux de convolution 3x3 ou des noyaux de convolution 5x5, de préférence des noyaux de convolution 3x3, pour les analyses successives d'image afin de détecter les représentations d'une ou plusieurs cibles potentielles. Les noyaux de convolution 3x3 permettent d'occuper un plus faible espace dans la mémoire 42 et d'effectuer plus rapidement les calculs avec un temps d'inférence court, en comparaison avec les noyaux de convolution 5x5. Certaines convolutions sont de préférence des convolutions dilatées (de l'anglais *dilated convolution*), ce qui permettent d'avoir un champ réceptif plus large avec un nombre de couches limité, par exemple moins de 50 couches, de préférence encore moins de 40 couches. Le fait d'avoir un champ réceptif plus large permet de prendre un compte un contexte visuel plus grand lors de la détection de la ou des représentations d'une ou plusieurs cibles potentielles 16.

Le réseau de neurones 26 comporte alors les canaux pour chaque couche 56, un canal étant, comme indiqué précédemment, une caractéristique de l'image d'origine 29 à une couche donnée. Dans le cas d'une implémentation dans un drone dont les ressources de calcul sont limitées, le nombre de canaux par chaque couche 56 est préférentiellement faible ; le nombre maximal de canaux par chaque couche 56 étant par exemple égal à 1024, de préférence encore à 512 pour la dernière couche. Le nombre minimal de canaux par chaque couche 56 est par exemple égal à 1.

Selon ce complément, le réseau de neurones 26 comporte en outre des noyaux de compression 58, tels que des noyaux de convolution 1x1, configurés pour compresser l'information, sans rajouter d'information liée à l'environnement spatial, c'est-à-dire sans rajouter d'information liée aux pixels disposés autour du ou des pixels considérés dans la caractéristique analysée, l'utilisation de ces noyaux de compressions permettant de supprimer l'information redondante. En effet, un nombre de canaux trop élevé est susceptible d'entraîner une duplication de l'information utile, et la compression vise alors à remédier à une telle duplication.

En complément facultatif, le réseau de neurones 26 comporte un dictionnaire de boites de référence, à partir desquelles sont réalisées les régressions qui calculent les boites de sortie. Le dictionnaire de boites de référence permet de tenir compte du fait qu'une prise de vue aérienne est susceptible de déformer les objets, avec une reconnaissance des objets selon un angle de vue particulier, différent de l'angle de vue en prise de vue terrestre. Le dictionnaire de boites de référence permet également de tenir compte d'une taille des objets en prise de vue aérienne différente de celle en prise de vue terrestre. La taille des plus petites des boîtes de référence est alors, par exemple, choisie inférieure ou égale à un dixième de la taille de l'image initiale 29 fournie en tant que variable d'entrée au réseau de neurones 26.

L'apprentissage du réseau de neurones 26 est de préférence supervisé. Il utilise alors, par exemple, un algorithme de rétropropagation du gradient d'erreur, tel qu'un algorithme fondé sur la minimisation d'un critère d'erreur en utilisant une méthode dite de descente du gradient.

L'image 29 fournie en tant que variable d'entrée au réseau de neurones 26 présente de préférence des dimensions inférieures ou égales à 512 pixels x 512 pixels.

Selon l'invention, une première variable de sortie 30A du réseau de neurones 26 est un ensemble de coordonnées définissant un ou plusieurs contours d'une ou plusieurs zones entourant les représentations des cibles potentielles 16.

Une deuxième variable de sortie 30B du réseau de neurones 26 est une catégorie associée à la représentation de la cible, la catégorie étant de préférence choisie parmi le groupe consistant en : une personne, un animal, un véhicule, un élément de mobilier contenu dans une habitation, tel qu'une table, une chaise, un robot.

En complément facultatif, une troisième variable de sortie 30C du réseau de neurones 26 est un indice de confiance par catégorie associé aux représentations des cibles potentielles 16. Selon ce complément, le module électronique de détection 24 est alors de préférence configuré en outre pour ignorer une représentation ayant un indice de confiance inférieur à un seuil prédéfini.

Le module électronique de suivi 32 est configuré pour suivre, dans différentes images prises successivement par le capteur d'image 12, une représentation de la cible 16, et l'ensemble des coordonnées définissant un contour d'une zone entourant la représentation de la cible 16, issu du réseau de neurones 26 et fourni par le module de détection 24 autorise alors une initialisation du suivi d'une ou plusieurs cibles 16 ou encore un asservissement, ou recalibrage, du suivi de la ou des cibles 16, de préférence mobiles.

Le module de comparaison 34 est configuré pour comparer une ou plusieurs premières représentations d'une ou plusieurs cibles potentielles 16 issues du module de détection 24 avec une deuxième représentation de la cible 16 issue du module de suivi 32, et le résultat de la comparaison est, par exemple, utilisé pour l'asservissement, ou recalibrage, du suivi de la ou des cibles 16.

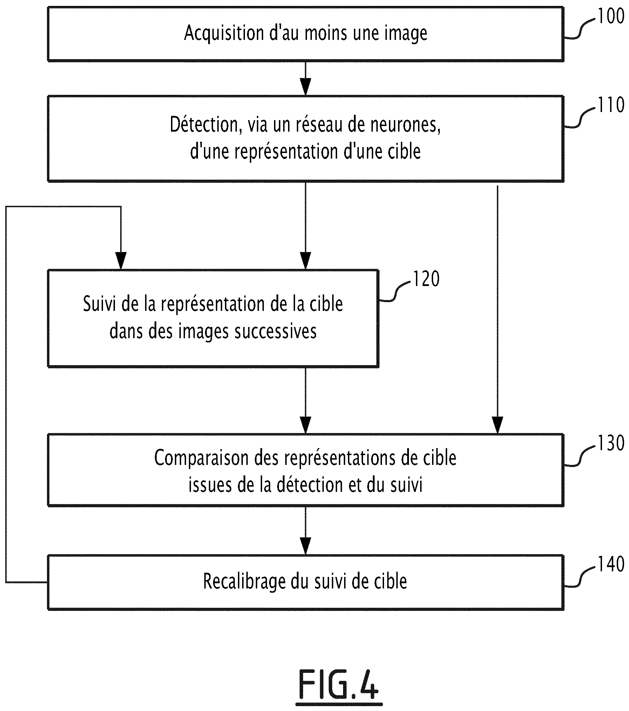

Le fonctionnement du drone 10 selon l'invention, en particulier de son dispositif électronique de détermination 14, va être à présent décrit à l'aide de la figure 4 illustrant un organigramme du procédé de détermination selon l'invention, mis en oeuvre par ordinateur.

Lors d'une étape initiale 100, le module de détection 24 acquiert une image d'une scène comportant une pluralité d'objets dont une ou plusieurs cibles 16, l'image ayant été prise par le capteur d'image 12.

Le module de détection 24 détecte ensuite, lors de l'étape 110, dans l'image acquise et à l'aide de son réseau de neurones artificiels 26, les représentations d'une ou plusieurs cibles potentielles 16 parmi la pluralité d'objets représentés, une variable d'entrée 28 du réseau de neurones 26 étant une image 29 dépendant de l'image acquise et la première variable de sortie 30A du réseau de neurones 26 étant un ensemble de coordonnées définissant un ou plusieurs contours d'une ou plusieurs zones entourant les représentations d'une ou plusieurs cible potentielles 16. La zone ainsi détectée est de préférence une zone rectangulaire, également appelée fenêtre.

En complément facultatif, lors de l'étape 110, le module de détection 24 calcule également un indice de confiance par catégorie associé à la ou aux représentations d'une ou plusieurs cibles potentielles 16, cet indice de confiance étant la troisième variable de sortie 30C du réseau de neurones 26. Selon ce complément, le module de détection 24 est alors en outre apte à ignorer une représentation ayant un indice de confiance inférieur à un seuil prédéfini.

En complément facultatif encore, lors de l'étape 110, le module de détection 24 détermine en outre une ou plusieurs catégories associées aux représentations d'une ou plusieurs cibles potentielles 16, cette catégorie étant par exemple choisi parmi une personne, un animal, un véhicule, un élément de mobilier contenu dans une habitation, tel qu'une table, une chaise, un robot. Cette catégorie étant la deuxième variable de sortie 30B du réseau de neurones 26.

La ou les zones entourant chaque représentation d'une ou plusieurs cibles potentielle 16 respective, estimées lors de l'étape 110 par le module de détection 24, sont ensuite utilisées, lors de l'étape 120, pour le suivi de la ou des représentations de cible 16 dans des images successives prises par le capteur d'image 12. La ou les zones entourant chaque représentation d'une ou plusieurs cibles potentielles 16 respective sont, par exemple, affichées sur l'écran d'affichage 19 de la manette 18, de manière superposée aux images correspondantes issues du capteur d'image 12, afin de permettre à l'utilisateur d'initialiser le suivi de cible en choisissant la cible 16 que le module de suivi 32 devra suivre, ce choix étant par exemple effectué via une sélection tactile sur l'écran 19 de la zone correspondant à la cible 16 à suivre.

La ou les zones entourant chaque représentation d'une ou plusieurs cibles potentielles 16 respective, estimées lors de l'étape 110 par le module de détection 24, sont en complément utilisées, lors de l'étape 130, pour être comparées, par le module de comparaison 34, à la représentation de cible 16 issue du module de suivi 32, et le résultat de la comparaison 34 permet alors un recalibrage, c'est-à-dire un asservissement, du suivi de cibles 16 lors de l'étape 140.

Le dispositif électronique de détermination 14 permet alors de déterminer plus efficacement une ou plusieurs représentations de cibles potentielles 16 parmi la pluralité d'objets représentés dans l'image prise par le capteur 12, le réseau de neurones 26 mise en oeuvre par le module de détection 24 permettant d'estimer directement un ensemble de coordonnées définissant un ou plusieurs contours de zones entourant les représentations d'une ou plusieurs cibles potentielles 16 pour chaque cible 16.

De manière facultative, le réseau de neurones 26 permet également de calculer en même temps un indice de confiance par catégorie associé à la représentation d'une ou plusieurs cibles potentielles 16, ce qui permet d'ignorer une représentation ayant un indice de confiance inférieure à un seuil prédéfini.

De manière facultative encore, le réseau de neurones 26 permet également de déterminer une ou plusieurs catégories associées à la représentation d'une ou plusieurs cibles potentielles 16, cette catégorie étant par exemple choisi parmi une personne, un animal et un véhicule, tel qu'une voiture, et cette détermination de catégorie permet alors par exemple de faciliter l'initialisation du suivi de cible, en affichant de manière optionnelle seulement la ou les cibles 16 correspondant à une catégorie prédéfinie parmi les catégories précitées.

On conçoit ainsi que le drone 10 selon l'invention et le procédé de détermination associé sont plus efficaces que le drone de l'état de la technique pour déterminer la représentation de la cible, en ne nécessitant pas d'effectuer, préalablement à la mise en oeuvre du réseau de neurones 26, une différence de contours ou une modélisation de l'arrière-plan pour estimer la zone entourant une représentation de la cible 16, et en ne nécessitant pas davantage de connaitre la position de la cible 16 pour pouvoir en détecter une représentation dans l'image.

## Revendications

1. Drone (10), comprenant :
- un capteur d'image (12) configuré pour prendre une image d'une scène comportant une pluralité d'objets,
- un dispositif électronique de détermination (14) comportant un module électronique de détection (24) configuré pour détecter via un réseau de neurones (26), dans l'image prise par le capteur d'image (12), une représentation d'une cible potentielle (16) parmi la pluralité d'objets représentés, une variable d'entrée (28) du réseau de neurones (26) étant une image (29) dépendant de l'image prise, au moins une variable de sortie (30, 30A, 30B, 30C) du réseau de neurones (26) étant une indication relative à la représentation de la cible potentielle,
**caractérisé en ce qu'**une première variable de sortie (30A) du réseau de neurones (26) est un ensemble de coordonnées définissant un contour d'une zone entourant la représentation de la cible potentielle (16).

2. Drone (10) selon la revendication 1, dans lequel une deuxième variable de sortie (30B) du réseau de neurones (26) est une catégorie associée à la représentation de la cible,
la catégorie étant de préférence choisi parmi le groupe consistant en : une personne, un animal, un véhicule, un élément de mobilier contenu dans une habitation.

3. Drone (10) selon la revendication 2, dans lequel une troisième variable de sortie (30C) du réseau de neurones (26) est un indice de confiance par catégorie associé à chaque représentation d'une cible potentielle (16).

4. Drone (10) selon la revendication 3, dans lequel le module électronique de détection (24) est configuré en outre pour ignorer une représentation ayant un indice de confiance inférieur à un seuil prédéfini.

5. Drone (10) selon l'une quelconque des revendications précédentes, dans lequel le dispositif électronique de détermination (14) comporte en outre un module électronique de suivi (32) configuré pour suivre, dans différentes images prises successivement par le capteur d'image (12), une représentation de la cible (16).

6. Drone (10) selon la revendication 5, dans lequel le dispositif électronique de détermination (14) comporte en outre un module électronique de comparaison (34) configuré pour comparer une première représentation de la cible potentielle (16) issue du module électronique de détection (24) avec une deuxième représentation de la cible (16) issue du module électronique de suivi (32).

7. Drone (10) selon l'une quelconque des revendications précédentes, dans lequel le réseau de neurones (26) est un réseau de neurones convolutionnel.

8. Procédé de détermination d'une représentation d'une cible parmi une pluralité d'objets représentés dans une image, l'image étant issue d'un capteur d'image embarqué sur un drone,
le procédé étant mis en oeuvre par un dispositif électronique de détermination (14) embarqué sur le drone (10), et comprenant :
- l'acquisition (100) d'au moins une image d'une scène comportant une pluralité d'objets,
- la détection (110) via un réseau de neurones (26), dans l'image acquise, d'une représentation de la cible potentielle (16) parmi la pluralité d'objets représentés, une variable d'entrée (28) du réseau de neurones (26) étant une image (29) dépendant de l'image acquise, au moins une variable de sortie (30, 30A, 30B, 30C) du réseau de neurones (26) étant une indication relative à la représentation de la cible potentielle (16),
**caractérisé en ce qu'**une première variable de sortie (30A) du réseau de neurones (26) est un ensemble de coordonnées définissant un contour d'une zone entourant la représentation de la cible potentielle (16).

9. Procédé selon la revendication 8, dans lequel le procédé comprend en outre le suivi (120), dans différentes images acquises successivement, d'une représentation de la cible (16).

10. Procédé selon la revendication 9, dans lequel le procédé comprend en outre la comparaison (130) de première et deuxième représentations de la cible (16), la première représentation de la cible potentielle (16) étant obtenue via la détection (110) avec le réseau de neurones (26), et la deuxième représentation de la cible (16) étant obtenue via le suivi (120) de la représentation de la cible (16) dans différentes images acquises successivement.

11. Programme d'ordinateur comportant des instructions logicielles qui, lorsqu'elles sont exécutées par un ordinateur, mettent en oeuvre un procédé selon l'une quelconque des revendications 8 à 10.
